# EUROPÄISCHE PATENTANMELDUNG

(11) **EP 1 418 094 A2**
(43) Veröffentlichungstag der Anmeldung: **12.05.2004**
(21) Anmeldenummer: 03025280.3
(22) Anmeldetag: 06.11.2003
(51) Int. Cl.: B60R 21/20, D04H 3/16, D04H 3/10, D04H 3/14

(54) **Airbagschutzhülle**

(30) Priorität: 06.11.2002 DE 10252034
(71) Anmelder: Johns Manville Europe GmbH, 61352 Bad Homburg v.d.H. (DE)
(72) Erfinder: Plötz, Kurt, 65529 Waldems (DE)
(74) Vertreter: Luderschmidt, Schüler & Partner

(57) **Zusammenfassung**

Es wird ein Verfahren zur Herstellung einer Hülle für einen Seitenairbag beschrieben, indem man zunächst ein Polyestervlies herstellt, dieses Rohvlies mittels Nadelung vorverfestigt und das so vorverfestigte Vlies mittels eines Prägekalanders endverfestigt und ausschrumpft, das so verfestigte und ausgeschrumpfte Vlies zu einer Hülle konfektioniert und die Hülle mit einer Sollbruchstelle zum Aufreißen der Hülle im Kollisionsfall versieht.

Das Verfahren ist einfach durchzuführen und führt zu preiswerten Hüllen mit verbesserten Eigenschaften.

## Beschreibung

Die Erfindung betrifft ein Verfahren zur Herstellung von Schutzhüllen für Seitenairbags.

Seitenairbags und Schutzhüllen sind an sich bereits seit einiger Zeit bekannt. Während sog. Frontairbags im Lenkrad eines Fahrzeugs angebracht sind, um den Fahrer des Fahrzeugs bei einem Unfall zu schützen und für den Beifahrer entsprechende Airbags in einer Ausnehmung im Armaturenbrett angeordnet sind, werden Seitenairbags zusätzlich zu den Frontairbags eingebaut und werden üblicherweise im Dachbereich des Fahrzeugs untergebracht und haben die Aufgabe, insbesondere den Kopf und den Hals der im Kraftfahrzeug sitzenden Personen zu schützen.

In der DE 100 61 367 A1 wird eine entsprechende Hülle für einen Seitenairbag beschrieben, bei der die Hülle aus einem verfestigten Polyesterspinnvlies besteht, das keinen chemischen Binder enthält, und eine Sollbruchstelle zum Aufreißen der Hülle im Kollisionsfall aufweist.

Zur Herstellung derartiger Hüllen wird zunächst ein Polyestervlies, insbesondere ein Polyesterspinnvlies hergestellt, dieses Rohvlies wird dann im allgemeinen vorverfestigt, z. B. durch mechanisches Vernadeln oder auch thermisch mittels eines Kalanders.

Nach dieser Vorverfestigung findet die eigentliche Verfestigung statt, diese erfolgt gemäß der Lehre der DE 100 61 367 A1 vorzugsweise hydrodynamisch bei einem Wasserdruck von 100 bis 400 bar. Es ist jedoch auch eine Verfestigung durch mechanisches Vernadeln möglich. Es ist zweckmäßig nach dieser Verfestigung noch eine Kalandrierung anzuschließen, bei der das Vlies ausschrumpfen soll, wobei unter Ausschrumpfen gemäß der Lehre dieser Deutschen Patentanmeldung zu verstehen ist, dass der Vliesstoff bei einer späteren Wärmebehandlung nicht oder nur noch unwesentlich schrumpft. Diese Kalandrierung wird mit einem Trommelkalander oder Tuchkalander durchgeführt.

Vorzugsweise weist das dort beschriebene Polyesterspinnvlies eine geglättete Oberfläche auf, wie sie z. B. mittels eines Glattkalanders erzeugt werden kann.

Es hat sich herausgestellt, dass Hüllen, die mittels einem hydrodynamisch vernadelten Vlies hergestellt worden sind, für bestimmte Einsatzzwecke zu weich sind.

Auch zeigt sich, dass Hüllen mit beidseitig glatten Oberflächen beim Biegen zum Knicken neigen und dabei ein rascheliges Geräusch erzeugen.

Aus der DE 100 09 283 C2 ist die Punktkalandrierung von Vliesstoffen bekannt, die zu Hüllen für Airbags weiterverarbeitet werden sollen, dabei dient diese Punktkalandrierung einer punktuellen Verschmelzung der Filamente, welche bei dem Vlies gemäß der DE 100 09 283 C2 durch Splitten von speziellen, vor dem Splitten einen Titer von 1,5 bis 5 dtex aufweisenden Mehrkomponentenendlosfilamenten erhalten worden sind. Die gesplitteten Fäden haben einen Titer von 0,1 bis 0,2 dtex. Diese Verschmelzung bewirkt eine Erhöhung der Festigkeit und der Abriebbeständigkeit des sehr feintitrigen Mikrofilamentvliesstoffes.

Bei dieser Patentschrift geht man davon aus, dass bei einer Airbaghülle hohe Festigkeiten und gleichzeitig niedrige Weiterreißfestigkeiten erforderlich sind, und verwendet deshalb einen Mehrkomponentenmikrofilament-Vliesstoff, der in einem sehr aufwendigen Verfahren hergestellt wird.

Man beabsichtigt durch Einstellung einer niedrigen Weiterreißfestigkeit die Entfaltung des Airbags nicht zu behindern. Dabei besteht aber das Risiko, dass der schlagartig expandierende Airbag nicht nur an der Sollbruchstelle austritt sondern, dass auch unkontrolliert die Öffnungen in der Schutzhülle aufreißen können, durch die die gesamte Seitenairbagkonstruktion mittels Halterungen am Dachhimmel befestigt ist. Dadurch besteht die Gefahr, dass der Airbag seine Schutzfunktion bei einem Unfall nicht voll entfalten kann.

Dadurch, dass zunächst eine komplizierte Herstellung von Mikrofilamentvliesstoffen erforderlich ist, sodann ein Splitten durch Wasserstrahlvernadelung und anschließend noch eine Punktkalandrierung zwecks Verkleben der Fäden miteinander durchzuführen ist, wird das Verfahren sehr kompliziert, ist somit nicht einfach durchzuführen und entspricht somit auch nicht den Anforderungen, die man an ein wirtschaftliches Verfahren stellt.

Obwohl bereits eine ganze Reihe von Verfahren bekannt sind, Hüllen für Seitenairbags herzustellen, besteht noch ein Bedürfnis nach verbesserten, einfacheren, wirtschaftlicheren Verfahren, die zu preiswerteren Produkten mit guten und verbesserten Eigenschaften führen.

Aufgabe der Erfindung ist es deshalb, ein Verfahren zur Herstellung von Hüllen von Seitenairbags zur Verfügung zu stellen, das die Nachteile, welche Verfahren gemäß dem Stand der Technik aufweisen, nicht besitzen.

Aufgabe der Erfindung ist es insbesondere Airbaghüllen zur Verfügung zu stellen, bei denen die Dimensionsänderung unter Wettereinflüssen reduziert ist, die eine gute Brandfestigkeit aufweisen und die problemlos durch Konfektionierung des Vliesstoffs zu Airbaghüllen mit erforderlicher Stabilität und Steifigkeit erhalten werden können. Aufgabe der Erfindung ist es ferner, ein einfacheres Verfahren zur Verfügung zu stellen, mit dem auf wirtschaftlichere Weise die Herstellung von Schutzhüllen von Seitenairbags möglich ist und das zu preiswerten Produkten führt.

Diese Aufgabe wird gelöst durch ein Verfahren zur Herstellung einer Hülle für einen Seitenairbag, indem man zunächst ein Polyestervlies herstellt, dieses Rohvlies mechanisch mittels Nadeln vorverfestigt und das so vorverfestigte Vlies mittels eines Prägekalanders endverfestigt und ausschrumpft, das so verfestigte und ausgeschrumpfte Vlies zu einer Hülle konfektioniert und die Hülle mit einer Sollbruchstelle zum Aufreißen der Hülle im Kollisionsfall versieht.

Es ist vorteilhaft, die Vorverfestigung mit Nadeln mit einer Vernadelungsdichte von 10 bis 50 Stichen/cm² durchzuführen.

Zum Verfestigen und Ausschrumpfen ist ein Prägekalander mit Punktprägeprofil besonders geeignet. Vorzugsweise weist dieser Prägekalander eine Punktprägefläche von 6 bis 10 % auf.

In einer weiteren vorteilhaften Ausführungsform der Erfindung wird ein Prägekalander mit Stäbchenprofil verwendet. Es ist vorteilhaft, wenn dieser Prägekalander mit Stäbchenprofil eine Stäbchenprägefläche von 10 bis 30 % aufweist.

Als Polyester für die Polyestervliesherstellung ist Polyethylenterephthalat besonders geeignet. Das Vlies wird vorzugsweise in Form eines Polyesterspinnvlieses hergestellt.

Es ist vorteilhaft, wenn man bei der Herstellung des Vlieses den Titer der Polyesterfasern auf 1 bis 6 dtex einstellt, vorzugsweise auf einen Titer von 1 bis 4 dtex.

Die Endverfestigung und Ausschrumpfung wird bevorzugt bei einer Temperatur von 140 bis 220° C durchgeführt.

Das verwendete Polyestervlies weist vorzugsweise ein Flächengewicht von 60 bis 250, insbesondere von 100 bis 120 g/m² auf.

Das Rohvlies wird durch die Vorverfestigung, die Verfestigung und Schrumpfung bevorzugt auf eine Dicke von 0,2 bis 2 mm, insbesondere 0,8 bis 1,2 mm eingestellt.

Ein weiterer Gegenstand der Erfindung ist eine Hülle für einen Seitenairbag, hergestellt nach einem der vorstehend aufgeführten Verfahren.

Zur Durchführung des Verfahrens gemäß der Erfindung kann z. B. folgendermaßen vorgegangen werden.

Zunächst wird ein Polyestervlies aus Polyesterfasern hergestellt. Das Vlies kann aus Stapelfasern hergestellt werden, z. B. unter Verwendung einer Karde.

Bevorzugt wird das Polyestervlies jedoch als sog. Polyesterspinnvlies, insbesondere nach dem Spunbond-Verfahren hergestellt werden. Dieses Verfahren ist z. B. in DE-OS 2 460 755 beschrieben, dabei entsteht ein Vlies aus Endlosfilamenten.

Die Filamente werden zu einzelnen Filamentlagen auf ein sich bewegendes Band abgelegt. Anschließend findet eine Vorverfestigung insbesondere durch mechanisches Vernadeln statt. Es sind jedoch auch andere Vorverfestigungsverfahren möglich, z. B. ein hydrodynamisches Verfahren, bei dem insbesondere mit einem Wasserdruck von 100 bis 400 bar gearbeitet wird.

Nach der Vorverfestigung findet die eigentliche Verfestigung die sog. Endverfestigung statt, bei der das Vlies auch ausschrumpft. Dieses Endverfestigen und Ausschrumpfen wird mit Prägekalandern durchgeführt, d. h. Kalander, die erhabene Stellen aufweisen. Hier sind Prägekalander mit Punktprägeprofil und Prägekalander mit Stäbchenprofil besonders geeignet.

Diese Kalander sind an sich bekannt und im Handel erhältlich, z. B. durch die Firma Küsters in Krefeld, Deutschland zu beziehen. Die Temperatur, bei welcher die Endverfestigung und das Ausschrumpfen stattfindet, ist vorzugsweise 140° bis 220° C. Diese Temperaturangaben beziehen sich auf die Temperatur des Prägekalanders.

Das durch Vorverfestigung und Endverfestigung und Ausschrumpfen auf eine Dicke von etwa 0,4 bis 2 mm, insbesondere auf 0,8 bis 1,2 mm, verdichtete Vlies wird sodann in an sich bekannter Weise zu einer Hülle konfektioniert, die eine entsprechende Sollbruchstelle zum Aufreißen der Hülle im Kollisionsfall aufweist.

Bevorzugt enthält das Polyestervlies, aus dem die Hülle hergestellt worden ist, keinen chemischen Binder.

Es war besonders überraschend, dass es gemäß der Erfindung auf einfache Weise möglich ist, Hüllen für Seitenairbags herzustellen, die sich durch gute Eigenschaften auszeichnen und die aufgrund ihres wirtschaftlichen Herstellungsverfahrens sehr preiswert sind. Sie besitzen eine gute Luftdurchlässigkeit, haben eine Weiterreißfestigkeit, die den Ansprüchen der Automobilhersteller entsprechen, werden beim Biegen nicht raschelig und haben eine gute Delaminierungsfestigkeit.

Das Verfahren ist sehr variabel, so dass man den Wünschen des Kunden sehr entgegen kommen kann. So lässt sich das Eigenschaftsprofil der Hüllen durch Auswahl geeigneter Titer beispielsweise im Bereich von 1 bis 6 dtex , durch Wahl der Vorfestigung, d. h. beispielsweise der Vemadelungsdichte und auch durch Auswahl der Kalandrierungsbedingungen wie Temperatur, Prägefläche sehr gut steuern.

Die Erfindung wird durch folgende Beispiele näher erläutert:

### Beispiel 1

Es wird ein 120 g/m² schweres Polyesterspinnvlies nach dem Spunbond-Verfahren mit Filamenten mit einem Titer von 2 dtex erzeugt und mit 42 Stichen pro cm² mechanisch mittels Nadeln vorverfestigt. Der so hergestellte Vliesstoff wird sodann mit einem Prägekalander mit einem Punktprägeprofil (mit einer Prägefläche von ca. 8 %) thermisch endverfestigt und ausgeschrumpft. Die Vliesdicke beträgt 0,8 mm, die Weiterreißfestigkeit in Längsrichtung 180 N und in Querrichtung 220 N. Das so hergestellte Vlies wird sodann in an sich bekannter Weise zu einer Hülle für Seitenairbags konfektioniert und mit einer entsprechenden Sollbruchstelle versehen.

### Beispiel 2

Ein 120 g/m² schweres Polyesterspinnvlies aus 2 dtex Filamenten wurde mit 42 Stichen pro cm² mechanisch vorverfestigt und mit einem Prägekalander mit Stäbchenprofil (ca. 20 % Prägefläche) thermisch endverfestigt und ausgeschrumpft. Die Vliesdicke beträgt 0,6 mm, die Weiterreißfestigkeit in Längsrichtung beträgt 120 N und in Querrichtung 200 N. Das so hergestellt Vlies wird sodann in an sich bekannter Weise zu einer Hülle für Seitenairbags konfektioniert und mit einer Sollbruchstelle zum Aufreißen der Hülle im Kollisionsfall versehen.

## Patentansprüche

1. Verfahren zur Herstellung einer Hülle für einen Seitenairbag, indem man zunächst ein Polyestervlies herstellt, dieses Rohvlies mechanisch mittels Nadeln vorverfestigt und das so vorverfestigte Vlies mittels eines Prägekalanders endverfestigt und ausschrumpft, das so verfestigte und ausgeschrumpfte Vlies zu einer Hülle konfektioniert und die Hülle mit einer Sollbruchstelle zum Aufreißen der Hülle im Kollisionsfall versieht.

2. Verfahren nach Anspruch 1, **dadurch gekennzeichnet, dass** man mit einer Vernadelungsdichte von 10 bis 50 Stichen /cm² vorverfestigt.

3. Verfahren nach einem oder mehreren der Ansprüche 1 bis 2, **dadurch gekennzeichnet, dass** man zum Verfestigen einen Prägekalander mit Punktprägeprofil verwendet.

4. Verfahren nach Anspruch 3, **dadurch gekennzeichnet, dass** man einen Prägekalander mit einer Punktprägefläche von 6 bis 10 % verwendet.

5. Verfahren nach einem oder mehreren der Ansprüche 1 bis 2, **dadurch gekennzeichnet, dass** man einen Prägekalander mit Stäbchenprofil verwendet.

6. Verfahren nach Anspruch 5, **dadurch gekennzeichnet, dass** man einen Prägekalander mit 10 bis 30 % Stäbchenprägefläche verwendet.

7. Verfahren nach mindestens einem der Ansprüche 1 bis 6, **dadurch gekennzeichnet, dass** man als Polyester Polyethylenterephthalat verwendet.

8. Verfahren nach mindestens einem der Ansprüche 1 bis 7, **dadurch gekennzeichnet, dass** man eine Polyesterspinnvlies verwendet.

9. Verfahren nach mindestens einem der Ansprüche 1 bis 8, **dadurch gekennzeichnet, dass** man Polyesterfasern mit einem Titer von 1 bis 6 dtex verwendet.

10. Verfahren nach Anspruch 9, **dadurch gekennzeichnet, dass** man Polyesterfasern mit einem Titer von 1 bis 4 dtex verwendet.

11. Verfahren nach mindestens einem der Ansprüche 1 bis 10, **dadurch gekennzeichnet, dass** man die Endverfestigung und Ausschrumpfung bei 140 bis 220° C durchführt.

12. Verfahren nach mindestens einem der Ansprüche 1 bis 11, **dadurch gekennzeichnet, dass** das Polyestervlies ein Flächengewicht von 60 bis 250 g/m² aufweist.

13. Verfahren nach Anspruch 12, **dadurch gekennzeichnet, dass** das Flächengewicht 100 bis 120 g/m² beträgt.

14. Verfahren nach mindestens einem der Ansprüche 1 bis 13, **dadurch gekennzeichnet, dass** man das Polyestervlies durch die Vorverfestigung, Verfestigung und Schrumpfung auf eine Dicke von 0,4 bis 2 mm bringt.

15. Verfahren nach Anspruch 14, **dadurch gekennzeichnet, dass** die Dicke 0,8 bis 1,2 mm beträgt.

16. Hülle für einen Seitenairbag hergestellt nach einem Verfahren gemäß einem oder mehreren der Ansprüche 1 bis 15.
